# EUROPÄISCHE PATENTSCHRIFT

(11) **EP 0 530 384 B1**
(45) Veröffentlichungstag und Bekanntmachung des Hinweises auf die Patenterteilung: **03.01.1996**
(21) Anmeldenummer: 91113358.5
(22) Anmeldetag: 08.08.1991
(51) Int. Cl.: G05B 19/418, B23Q 37/00, B23B 31/16

(54) **Werkzeugmaschinensteuerung zur gleichzeitigen Bearbeitung von plattenförmigen Werkstücken mit mehreren Werkzeugen**
Machine tool control for concurrent machining of sheet material with a plurality of tools
Commande de machine-outils pour l'usinage simulatané de pièces planes avec plusieurs outils

(43) Veröffentlichungstag der Anmeldung: 10.03.1993
(73) Patentinhaber: SIEMENS AKTIENGESELLSCHAFT, D-80333 München (DE)
(72) Erfinder: Friedrich, Ralf, Dipl.-Ing., W-8520 Erlangen (DE); Nickel, Eckhard, Dipl.-Ing., W-8552 Höchstadt (DE)

(56) Entgegenhaltungen:
- EP-A- 0 182 918
- US-A- 4 422 150
- US-A- 4 755 949

## Beschreibung

Bei der Fertigung plattenförmiger Werkstücke werden sogenannte Mehrfachbearbeitungsmaschinen eingesetzt. Bei diesem Maschinentyp sind mehrere Bearbeitungstechnologien integriert, z.B. Bohren, Fräsen, Nutsägen, Kantenumleimen. Im Gegensatz zu besonders aus der Metallbearbeitung bekannten Werkzeugmaschinen, bei denen gewöhnlich verschiedene Werkzeuge in einem Werkzeugrevolver oder einem anderen Werkzeugmagazin untergebracht sind und nach Bedarf aus diesen entnommen werden können, sind bei den Merfachbearbeitungsmaschinen alle verfügbaren Werkzeuge, wie Bohrer, Fräser, Nutsäge, gemeinsam auf einem fahrbaren Werkzeugträger angebracht. Zur Positionierung eines Werkzeugs an eine Arbeitsposition wird dabei der gesamte Werkzeugträger in der Ebene über dem plattenförmigen Werkstück so verfahren, daß das Werkzeug, mit dem ein Bearbeitungsvorgang durchgeführt werden soll, sich über dem Bearbeitungspunkt befindet. Dazu muß der Werkzeugmaschinensteuerung die Position des jeweiligen Werkzeugs bzw. der jeweiligen Werkzeugspindel bezüglich des Werkzeugträgernullpunktes bekannt sein. Bei jeder Vorgabe eines für die Bearbeitung ausgewählten Werkzeuges muß dann die Werkzeugmaschinensteuerung die Lage des Bearbeitungswerkzeuges bezüglich dem Werkzeugträgernullpunkt berücksichtigen und den Werkzeugträger entsprechend verfahren.

Bei der Bearbeitung von plattenförmigen Werkstücken, wie sie insbesondere in der Möbelindustrie vorkommt, müssen zur Befestigung von verschiedenen Elementen, z.B. von Scharnieren und Beschlägen, bestimmte Lochkonfigurationen in das Werkstück eingebracht werden. Dabei werden zur rationellen Bearbeitung gleichzeitig verschiedene Bohrer, die zusammen ein Werkzeugmodul bilden, eingesetzt. Nach herkömmlichen Verfahren müssen diese Bohrer der numerischen Steuerung einzeln vorgegeben werden, so daß pro verwendeten Bohrer ein Befehl erforderlich ist.

Hintergrund zum Stand der Technik liefern die Patentschriften US-A-4 755 949 sowie EP-A-0 182 918. Dabei nimmt erstgenannte Schrift Bezug auf eine Werkzeugmaschinensteuerung zur Bearbeitung von Drehteilen, bei der jeweils nur ein Werkzeug zur Bearbeitung eines Werkstückes zur Anwendung gelangt. Aus der letzteren der beiden genannten Schriften ist weiterhin eine symmetrische Bearbeitung eines Werkstückes bekannt, wobei jeweils ein eigenes Werkzeug das Werkstück aufeinanderfolgend an zueinander symmetrisch angeordneten Stellen bearbeitet. Eine spiegelbildliche Anordnung mehrere Werkzeuge, welche gleichzeitig verschiedene Werkzeuge, beispielsweise Bohrer, auf einen gemeinsamen Werkzeugmodul einsetzen, lassen sich daraus jedoch nicht herleiten.

Aufgabe der Erfindung ist es, eine Werkzeugmaschinensteuerung zu erhalten, mit der eine einfache Werkzeugmodulbearbeitung möglich ist.

Diese Aufgabe wird durch eine Werkzeugmaschinensteuerung zur Bearbeitung von plattenförmigen Werkstücken, insbesondere aus Holz oder Kunststoff, mit einem numerischen und einem speicherprogrammierbaren Steuerteil zur Steuerung der Position und der Funktionen eines Werkzeugträgers in einem Werkzeugträgerkoordinatensystem gelöst, wobei am Werkzeugträger mindestens ein Bearbeitungsaggregat mit mindestens zwei über ein Getriebe angetriebenen Werkzeugspindeln angebracht ist, wobei dem Werkzeugträger ein Werkzeugträger-Bezugspunkt und jedem Bearbeitungsaggregat ein Aggregat-Bezugspunkt zugeordnet und in der Steuerung hinterlegt wird, wobei die Lage der Werkzeugspindeln gegenüber den Aggregatbezugspunkten und die Lage der Aggregatbezugspunkte gegenüber dem Werkzeugträgerbezugspunkt vorgegeben wird und wobei nach Vorgabe einer Werkzeugspindel und einer Position für diese im Werkzeugträgerkoordinatensystem eine Positionierung des Werkzeugträgers erfolgt, indem die Lage einer vorgegebenen Werkzeugspindel bezüglich des Werkzeugträgerbezugspunktes als Positionskorrektur berücksichtigt wird, wobei beliebige Werkzeugspindelkombinationen als Werkzeugmodule vorgegeben werden und wobei jedem Werkzeugmodul eine frei wählbare führende Werkzeugspindel zugeordnet wird, bezüglich der die Positionierung im Werkzeugträgerkoordinaten system erfolgt. Dabei kann eine beliebige Anzahl von Werkzeugmodulen in dafür vorgesehenen Speicherplätzen der Werkzeugmaschinensteuerung einmal hinterlegt werden, so daß sie für einen Bearbeitungsgang jederzeit abrufbar sind. Durch die Vorgabe eines führenden Bohrers braucht die Position im Werkzeugmaschinenkoordinatensystem nur für diesen führenden Bohrer angegeben zu werden.

Die Positionierung des Werkzeugträgers wird dann von der numerischen Steuerung bezüglich der führenden Werkzeugspindel wie bei jeder anderen Werkzeugspindel durchgeführt. Die beteiligten Bohrer werden automatisch von der speicherprogrammierbaren Steuerung mit angewählt.

Jedem Werkzeugmodul kann nach einer weiteren Ausbildung der Erfindung ein spiegelbildliches Werkzeugmodul zugeordnet werden, das durch einen Spiegelbefehl aktiviert wird. So können auf einfache Weise z.B. Bohrungen für Scharniere und Beschläge am oberen und unteren Ende eines plattenförmigen Werkstückes angebracht werden.

Die symmetrische Bearbeitung mit einem Werkzeugmodul und einem gespiegelten Werkzeugmodul wird durch eine weitere vorteilhafte Ausbildung der Erfindung erleichtert, wobei im Werkzeugträgerkoordinatensystem ein erster und ein zweiter Werkstück-Nullpunkt vorgegeben wird, wobei die führende Werkzeugspindel zu einem ersten Punkt bezüglich des ersten Werkstücknullpunktes verfahren wird, wobei nach Auslösen des Spiegelbefehls der erste Punkt bezüglich des ersten Werkstück-Nullpunktes gespiegelt wird und wobei die gespiegelte führende Spindel zu einem zweiten Punkt verfahren wird, der dem gespiegelten Punkt bezüglich des zweiten Werkstück-Nullpunktes entspricht. Damit können auf einfache Weise nacheinander in eines oder in zwei plattenförmige Werkstücke eine Lochkonfiguration und die dazu spiegelbildliche eingebracht werden, wobei zur Auslösung des Bearbeitungsvorganges für die spiegelbildliche Lochkonfiguration lediglich ein Spiegelbefehl automatisch oder manuell ausgelöst werden muß.

Die Werkzeugmaschinensteuerung kann vom Hersteller und vom Anwender besonders einfach über eine grafische Bedienerführung im Dialogverfahren programmiert und bedient werden. Dabei ist es vorteilhaft, wenn die führende Werkzeugspindel eines Werkzeugmoduls auf einem Bedienersichtgerät gesondert visualisiert wird.

Ein Ausführungsbeispiel der Erfindung wird anhand der Zeichnung beschrieben. Dabei zeigen:
Fig. 1 eine Werkzeugmaschine zur Bearbeitung von plattenförmigen Werkstücken,
Fig. 2 die geometrische Lage von Werkzeugspindeln, Bohraggregate und des Werkzeugträgernullpunktes im Werkzeugmaschinenkoordinatensystem,
Fig. 3 das Blockschaltbild einer Werkzeugmaschinensteuerung,
Fig 4 ein Werkzeugmodul,
Fig. 5 die Spiegelung eines Werkzeugmoduls,
Fig. 6 die Einbringung von gespiegelten und nichtgespiegelten Bohrungen in Werkstücke.

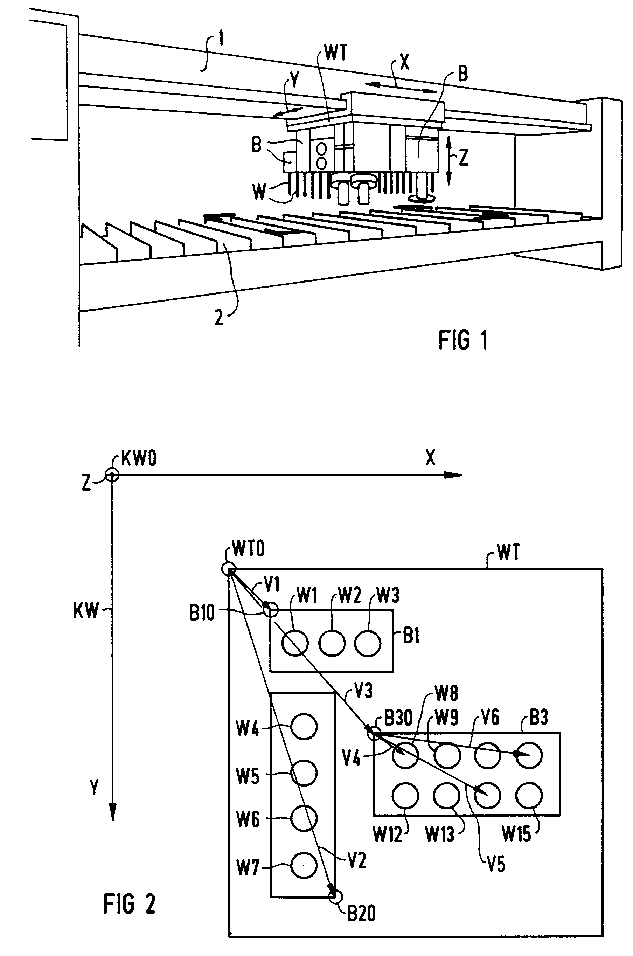

Fig. 1 zeigt die schematische Darstellung einer Werkzeugmaschine mit einem Werkzeugträger WT, der an einem Werkzeugmaschinenträger 1 verfahrbar aufgehängt ist. Dem Werkzeugträger WT ist ein Werkzeugträgerkoordinatensystem X, Y, Z zugeordnet, in dem er über Steuerbefehle einer nicht gezeigten Werkzeugmaschinensteuerung positionierbar ist. Am Werkzeugträger WT sind Bohr- und Fräsaggregate B angeordnet, die jeweils mindestens eine, in der Regel jedoch mindestens zwei Werkzeugspindeln aufweisen, die in der Regel über ein, jedem Bohraggregat zugeordnetes Getriebe angetrieben werden. Die Werkzeugspindeln nehmen Werkzeuge W, beispielsweise Bohrer auf, deren Spitzen nicht zwangsläufig, wie in Fig. 1 gezeigt, in einer Ebene angeordnetsein müssen, da auch Werkzeuge W verschiedener Geometrie, beispielsweise Bohrer unterschiedlichen Durchmessers und unterschiedlicher Längen, eingesetzt werden können. Der Werkzeugträger WT ist über einer Werkstückauflage 2 positionierbar. Auf die Werkstückauflage 2 können plattenförmige Werkstücke, beispielsweise Spanplatten, Tischlerplatten, Kunststoffplatten etc., gelegt werden. Die Werkstücke müssen jedoch nicht zwangsläufig eine plane Oberfläche aufweisen; es muß lediglich dafür gesorgt werden, daß sich die Werkzeuge W jeweils beabstandet von der erhabensten Stelle eines plattenförmigen Werkstückes befinden.

Soll mit einem Werkzeug W ein Bearbeitungsvorgang ausgeführt werden, so muß dieses Werkzeug in Arbeitsposition gebracht werden. Dazu wird es in axialer Richtung zur Werkstückauflage 2 verschoben. Diese Verschiebung wird - in der Regel über die Spindel - mit einem Stellglied bewirkt, das durch eine speicherprogrammierbare Steuerung angesteuert wird. Wenn sich das ausgewählte Werkzeug W in Arbeitsposition befindet, wird durch eine Zustellbewegung des Werkzeugträgers WT in Z-Richtung der Bearbeitungsvorgang ausgeführt. Dabei laufen die übrigen im Bohraggregat der ausgewählten Werkzeugspindel bzw. des ausgewählten Werkzeugs W befindlichen Spindeln leer mit, wenn sie über dasselbe Getriebe angetrieben werden.

Zur Positionierung eines ausgewählten Werkzeuges W an einen Bearbeitungspunkt muß der Werkzeugmaschinensteuerung die Positionder Werkzeuge bzw. der Werkzeugspindeln W1...W21 bekannt sein, damit eine entsprechende Lagekorrektur innerhalb des Werkzeugmaschinenkoordinatensystems bei der Positionierung vorgenommen werden kann. Dies wird im folgenden anhand der Fig. 2 erläutert.

Fig. 2 zeigt einen Werkzeugträger WT, dem ein Werkzeugträger-Nullpunkt WTO zugeordnet ist. Am Werkzeugträger WT sind drei Bohraggregate B1, B2, B3 befestigt. Wobei das Bohraggregat B1 die Werkzeugspindeln W1, W2, W3, das Bohraggregat W2 die Werkzeugspindeln W4...W7 und das Bohraggregat B3 die Werkzeugspindeln W8...W15 aufweist. Jedem Bohraggregat B1, B2, B3 ist ein Bohraggregat-Nullpunkt B10, B20, B30 zugeordnet. In der Darstellungsind die Bohraggregat-Nullpunkte B10, B20, B30 jeweils an eine Ecke der Bohraggregate B1, B2, B3 angeordnet, da sich ein solcher Eckpunkt gut für die Vermessung der Werkzeugspindeln W1...W15 eignet. Die Bohraggregate-Nullpunkte könnten aber ohne weiteres an einer anderen beliebigen Stelle Koordinatensystem KW, beispielsweise an einer anderen exponierten Stelle des Werkzeugträgers WT, festgelegt werden. Diese Stelle sollte so gewählt werden, daß eine möglichst einfache Vermessung zu den Werkzeugspindeln W1...W15 möglich ist. Für den Werkzeugträger-Nullpunkt WTO gilt das zu den Bohraggregate-Nullpunkten B10, B20, B30 Ausgeführte entsprechend.

Die Lage der Bohraggregat-Nullpunkte B10, B20, B30 bezüglich des Werkzeugträger-Nullpunktes WTO wird der Werkzeugmaschinensteuerung durch Vektoren V1, V2, V3 vorgegeben. Die Lage der Werkzeugspindeln W1...W15, bezüglich der Bohraggregate-Nullpunkte B10, B20, B30 wird der Werkzeugmaschinensteuerung ebenfalls durch Vektoren, von denen in Fig. 2 nur die Vektoren V4, V5, V6 gezeigt sind, vorgegeben. Da die Werkzeugmaschinensteuerung den gesamten Werkzeugträger über den Werkzeugträger-Nullpunkt WT im Werkzeugmaschinen-Koordinatensystem KW positioniert, muß zur Positionierung einer Werkzeugspindel W1... W15 die Lage dieser Werkzeugspindel als Positionskorrektur berücksichtigt werden. Diese Positionskorrektur kann über die Vektoren V1...V6, die der Werkzeugmaschinensteuerung als Maschinendatenvorgebbar sind, berechnet werden.

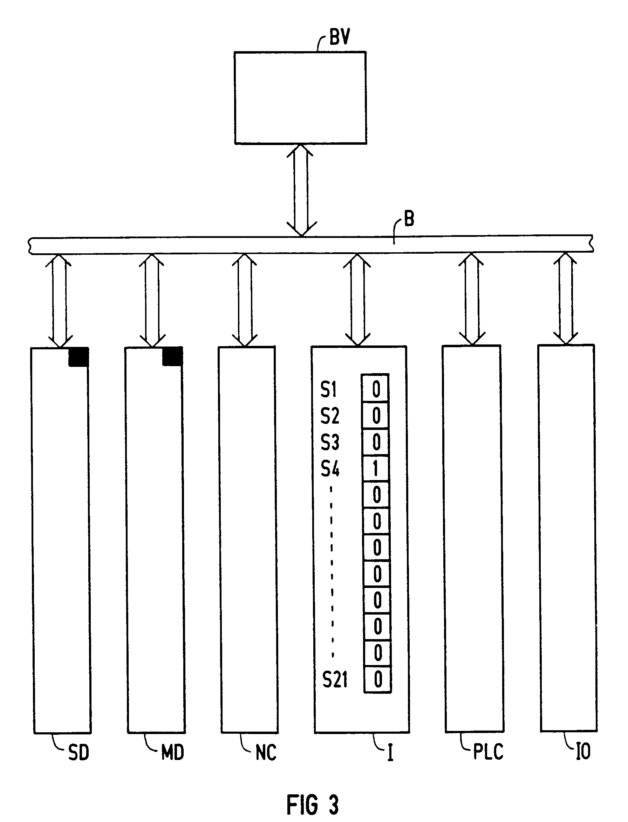

Diese Art der Vorgabe der Werkzeugspindeln W1...W15 zum Werkzeugträger-Nullpunkt erlaubt einen einfachen Austausch von Bohraggregaten, wenn für einen anderen Typ einer solchen Werkzeugmaschineder gleiche Werkzeugträger WT mit unterschiedlicher Bohraggregat-Konfiguration oder mit Bohraggregaten von unterschiedlicher Spindelbestückung verwendet werden soll. Wenn die Bohraggregate-Nullpunkte B10, B20, B30 nicht geändert werden, muß der Werkzeugmaschinensteuerung lediglich die neue Lage von Werkzeugspindeln gegenüber diesen Nullpunkten vorgegeben werden. Zum zweiten erlaubt diese Art der Vorgabe der geometrischen Lage der Werkzeugspindeln W1...W15 eine einfache und übersichtliche Ausführung bzw. Programmierung der Werkzeugmaschinensteuerung.Dies wird anhand der Fig. 3 beschrieben.

Fig. 3 zeigt das Blockschaltbild einer Werkzeugmaschinensteuerung mit einer Bedien- und Visualisiervorrichtung BV, die über ein Bussystem B mit einem Speicher für Settingdaten SD, einem Speicher für Maschinendaten MD, einem numerischen Steuerteil NC, einem Interface I, einem speicherprogrammierbaren Steuerteil PLC und einer Ein-Ausgabe-Einheit IO verbunden ist. Im Speicher für die Settingdaten werden die geometrischen Daten der Werkzeuge hinterlegt, beispielsweise die jeweilige Länge der in den Werkzeugspindeln W1...W15 befestigten Bohrer. Im Speicher für die Maschinendaten MD wird die geometrische Lage der Werkzeugspindeln W1...W15, der Bohraggregate-Nullpunkte B10, B20, B30 und des Werkzeugträger-Nullpunktes WT hinterlegt. Im numerischen Steuerteil NC werden dann die Verfahrwege für den Werkzeugträger unter Berücksichtigung der Positionskorrektur, also der Lage einer ausgewählten Werkzeugspindel W1...W15 zum Werkzeugträger-Nullpunkt über den jeweiligen Aggregate-Nullpunkt berechnet. Die speicherprogrammierbare Steuerung PLC übernimmt dann das Ausrücken der Werkzeugspindeln, so daß die Werkzeuge in Arbeitsposition gebracht werden.

Für das Zusammenspiel zwischen numerischem Steuerteil NC und speicherprogrammierbaren Steuerteil PLC ist das Interface I vorgesehen. Das Interface I weist mindestens Speicherplätze für die Zustände "logisch Null" und "logisch Eins" auf. Die Anzahl der Speicherplätze entspricht der Anzahl der Werkzeugspindeln W1...W21.

Um einen Positioniervorgang des Werkzeugträgers auszulösen, wird vom Anwender über die Bedien- und Visualisiereinheit BV eine Werkzeugspindel W1...W15 und die Position im Werkzeugträgerkoordinatensystem KW, an die diese Spindel gebracht werden soll, angegeben. Die numerische Steuerung berechnet dann anhand der im Speicher für Maschinendaten hinterlegten Geometrieangaben den Verfahrweg des Werkzeugträgers. Gleichzeitig wird im Interface I in dem der ausgewählten Werkzeugspindel zugeordneten Speicherplatz der Wert "logisch Eins" gesetzt. Die speicherprogrammierbare Steuerung PLC fragt die Zustände der Speicherplätze S1...S21 des Interfaces I zyklisch ab und gibt über die Ein-Ausgabe-Einheit IO einen Steuerbefehl an die Ausrückvorrichtung der ausgewählten Werkzeugspindel, das ist im Beispiel die Werkzeugspindel W4. Dieser Vorgang kann von der speicherprogrammierbaren Steuerung PLC gleichzeitig, während die numerische Steuerung NC den Verfahrweg berechnet oder den Werkzeugträger bereits verfährt, ausgeführt werden.

Es kann aber vorkommen, daß sich der Werkzeugträger WT in einer Z-Position relativ nahe über dem Werkstück befindet, so daß ein in Arbeitsposition zu bringendes Werkzeug bereits mit dem Werkstück in Kontakt käme, noch bevor sich der Werkzeugträger an der richtigen Position befindet. In diesem Fall muß die Z-Position vorher korrigiert werden. Dazu kann im Speicher für die Settingdaten SD die Länge der in den Spindeln W1...W15 angebrachten Werkzeuge hinterlegt werden. Die numerische Steuerung NC wird dann zunächst überprüfen, ob sich der Werkzeugträger in einer Z-Position befindet, die einen Sicherheitsabstand des Werkzeugs zum Werkstück bei ausgerückter Werkzeugspindel gewährleistet und diese Z-Position gegebenenfalls vor der Positionierung in der XY-Richtung korrigieren und erst dann im Interface I das entsprechende Bit für die Werkzeugspindel W1...W21 setzen.

Die vorstehenden Ausführungen waren für das Verständnis der im folgenden beschriebenen Werkzeugmodulverarbeitung erforderlich. Die Werkzeugmodulverarbeitung macht es möglich, mehrere Werkzeuge gleichzeitig mit nur einem Befehl anzuwählen und mit ihnen einen Bearbeitungsvorgang auszuführen.

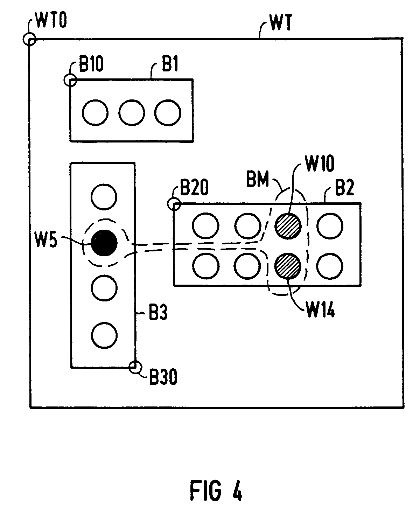

Fig. 4 zeigt wieder den Werkzeugträger WT mit dem Werkzeugträger-NullpunktWTO und den Bohraggregaten B1, B2, B3 und den Bohraggregate-Nullpunkten B10, B20, B30. Als Bohrmodule oder - da es sich nicht zwangsläufig um Bohrer handeln muß - als Werkzeugmodule, sind die Werkzeugspindeln W5, W10, W14 ausgewählt. Dabei ist die Werkzeugspindel W5 schwarz und die Werkzeugspindeln W10 bis W14 sind gestrichelt gezeichnet. Die Werkzeugspindel W5 wird nämlich als sogenannter führender Bohrer im Datenbereich SD der Werkzeugmaschinensteuerung hinterlegt. Die Werkzeugspindeln W10 und W14 werden als beteiligte Bohrer bezeichnet und ebenfalls in der Steuerung abgespeichert. Führende und beteiligte Bohrer bzw. Werkzeugspindeln eines Werkzeugmoduls sind dabei vom Anwender frei projektierbar.

Die Ausführung eines Positionier- und Bearbeitungsvorgangs ist dabei ebenso einfach wie die bereits beschriebene Positionierung eines einzelnen Werkzeuges. Der Anwender gibt jetzt lediglicht nicht eine einzelne Werkzeugspindel und deren Position vor, sondern er gibt das entsprechende Werkzeugmodul und die Position, an die der führende Bohrer W5 des Werkzeugmoduls positioniert werden soll, vor. Die numerische Steuerung NC berechnet dann, wie oben beschrieben, den Verfahrweg des Werkzeugträgers WT bezüglich des führenden Bohrers W5 und positioniert diesen entsprechend. Im Interface I wird jetzt nicht mehr nur 1 Bit für eine Werkzeugspindel gesetzt, sondern es werden für alle dem Werkzeugmodul zugehörigen Werkzeugspindeln W5, W10, W14 die zugehörigen Speicherplätze S5, S10, S14 mit dem Zustand "logisch Eins" gesetzt, so daß von der speicherprogrammierbaren Steuerung PLC gleichzeitig alle beteiligten und der führende Bohrer eines Werkzeugmoduls in Arbeitsposition gebracht werden.

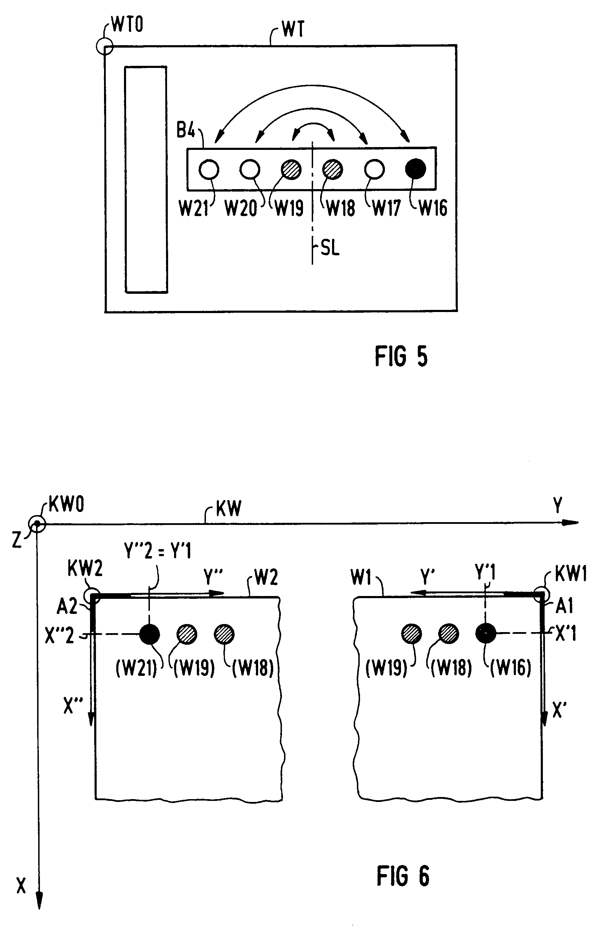

Bei der Bearbeitung von plattenförmigen Werkstücken kommt es häufig vor, daß zu bestimmten Lochkonfigurationen spiegelbildliche Lochkonfigurationen benötigt werden (Beispiel: Anbringung von Beschlägen an Türen und Fenstern etc.). Solche spiegelbildlichen Lochkonfigurationen können, wie anhand der Fig.5 nachfolgend beschrieben wird, realisiert werden.

Fig. 5 zeigt einen Werkzeugträger WT mit dessen zugehörigen Nullpunkt WTO, der mit einem nicht näher benannten (Rechteck) und einem Bohraggregat B4 bestückt ist. Das Bohraggregat B4 weist 6 Werkzeugspindeln W16 bis W21 auf, die zu einer Symmetrielinie SL symmetrisch angeordnet sind. Wie durch die Doppelpfeile angedeutet, ist den Werkzeugspindeln W16, W17, W18 jeweils eine symmetrische Werkzeugspindel W19, W20, W21 zugeordnet. Als Werkzeugmodul sind die Werkzeugspindeln W16, W18, W19 ausgewählt, wobei die Werkzeugspindel W16 die führende Werkzeugspindel und die Werkzeugspindeln W18, W19 die beteiligten Werkzeugspindeln sind. Durch Auslösen eines Spiegelbefehls wird das Werkzeugmodul gespiegelt, indem jeder Werkzeugspindel des Werkzeugmoduls die spiegelbildliche Werkzeugspindel zugeordnet wird. Im Ausführungsbeispiel wird dann die Werkzeugspindel W21 zur führenden und die Werkzeugspindeln W19, W18 zu beteiligten Werkzeugspindeln des gespiegelten Werkzeugmoduls.

Gemäß der Darstellung von Fig. 6 soll die Bearbeitung von plattenförmigen Werkzeugen, die mit einem Werkzeugmodul und dem Spiegelbild dieses Werkzeugmoduls versehen werden sollen, erläutert werden. Im Werkzeugmaschinen-Koordinatensystem KW mit den Koordinaten X, Y, Z und dem Nullpunkt KW0 ist ein erster Werkstück-Nullpunkt KW1 und ein zweiter Werkstück-Nullpunkt KW2 definiert. Diese Werkstück-Nullpunkte KW1, KW2 befinden sich jeweils in den Eckpunkten einer Anschlagvorrichtung, die auf der, aus Fig. 1 bekannten Werkstückauflage 2 angebracht sind. Der Werkstückträger wird nun über die Werkzeugmaschinensteuerung so positioniert, daß die führende Werkzeugspindel W16 des Werkzeugmoduls an die Position X'1,Y'1 bezüglich des Werkstück-Nullpunkt-Koordinatensystems X', Y' gebracht wird. Durch die Zustellbewegung des Werkzeugträgers in Z-Richtung kann dann die entsprechende Lochkonfiguration (W19), (W18), (W16) in das Werkstück W1 eingebracht werden. Gleichzeitig kann an dem zweiten Werkstückanschlag A2 das zweite Werkstück W2 angelegt werden. Durch Vorgabe des Spiegelbefehls über die aus Fig. 3 bekannte Bedien und Visualisiervorrichtung BV wird das Werkzeugmodul automatisch gespiegelt und es werden die Koordinaten X2, Y2 bezüglich des Koordinatensystems X"2, Y"2 für die gespiegelte führende Werkzeugspindel W21 berechnet, wobei X"2 gleich X'1 ist und Y''2 gleich -Y'11 ist. Mit Hilfe dieser Daten kann dann der Werkzeugträger WT durch die numerische Steuerung NC positioniert und die dem Werkzeugmodul entsprechende gespiegelte Lochkonfiguration (W21), (W19), (W18) in das Werkstück W2 eingebracht werden.

## Patentansprüche

1. Verfahren zur Werzeugmaschinensteuerung für eine Bearbeitung von plattenförmigen Werkstücken, insbesondere aus Holz oder Kunststoff, mit einem numerischen Steuerteil zur PosiSteuerung (X,Y,Z) und der Funktionssteuerung eines Werkzeugträgers (WT) in einem Werkzeugtragerkoordinatensystem (KW),
wobei am Werkzeugträger mindestens ein Bearbeitungsaggregat (B1...B3) mit mindestens zwei, synchron über ein Getriebe angetriebenen Werkzeugspindeln (W1...W15) angebracht ist,
wobei dem Werkzeugträger (WT) ein Werkzeugträgerbezugspunkt (WTO) und jedem Bearbeitungsaggregat (B1...B3) ein Aggregatsbezugspunkt (B10...B30) zugeordnet und in der Steuerung hinterlegt wird,
wobei die Lage der Werkzeugspindeln (W1...W21) gegenüber den Aggregatsbezugspunkten (B10...B30) und die Lage der Aggregatsbezugspunkte (B10...B30) gegenüber dem Werkzeugträgerbezugspunkt (WTO) vorgegeben wird,
wobei nach Vorgabe einer Werkzeugspindel (W1...W21) und einer Position für diese im Werkzeugträgerkoordinatensystem eine Positionierung des Werkzeugträgers (WT) erfolgt, indem die Lage dieser vorgegebenen Werkzeugspindel (W1...W21) bezüglich des Werkzeugträgerbezugspunktes (WTO) als Positionskorrektur berücksichtigt wird,
wobei beliebige Werkzeugspindelkombinationen (Wx,Wy,Wz) als Werkzeugmodule vorgegeben werden und wobei jedem Werkzeugmodul eine frei wählbare, führende Werkzeugspindel zugeordnet wird, bezüglich derdie Positionierung im Werkzeugträgerkoordinatensystem (KW) erfolgt.

2. Verfahren zur Werkzeugmaschinensteuerung nach Anspruch 1, wobei einem Werkzeugmodul ein spiegelbildliches Werkzeugmodul zugeordnet ist, das bei Bedarf durch einen Spiegelbefehl aktiviert wird.

3. Verfahren zur Werkzeugmaschinensteuerung nach Anspruch 2, wobei im Werkzeugtragerkoordinatensystem ein erster (KW1) und ein zweiter Werkstücknullpunkt (KW2) vorgegeben wird,
wobei die führende Werkzeugspindel (W1...W15) zu einem ersten Punkt (X1,Y1) bezüglich des ersten Werkstücknullpunktes (KW1) verfahren wird,
wobei nach Auslösen des Spiegelbefehls der erste Punkt (X1,Y1) bezüglich des ersten Werkstücknullpunktes (KW1) gespiegelt wird
und wobei die gespiegelte, führende Spindel zu einem zweiten Punkt (X"2,Y"2) verfahren wird, der dem gespiegelten Punkt (X'1,-Y'1) bezüglich des zweiten Werkstücknullpunktes (KW2) entspricht.

4. Verfahren zur Werkzeugmaschinensteuerung nach einem der vorstehenden Ansprüche, wobei alle geometrischen Daten, Werkzeugkorrekturenund Bohrmodulkonfigurationen über eine graphische Bedienerführung zur Steuerung im Dialogverfahren vorgegeben werden.

5. Verfahren zur Werkzeugmaschinensteuerung nach Anspruch 4, wobei die führende Werzeugspindel (W1...W21) eines Werkzeugmoduls auf einem Bedienersichtgerät (BV) gesondert visualisiert wird.

## Claims

1. Method for machine tool control for the machining of plate-shaped workpieces, in particular of wood or plastics, having a numerical control for the positioning (X,Y,Z) and the function control of a tool carrier (WT) in a tool-carrier coordinate system (KW), wherein there is applied to the tool carrier at least one machining unit (B1...B3) with at least two tool spindles (W1...W15) driven synchronously by way of a gearing,
wherein there is associated with the tool carrier (WT) and stored in the control a tool-carrier reference point (WTO) and there is associated with each machining unit (B1...B3) and stored in the control a unit reference point (B10...B30),
wherein the position of the tool spindles (W1...W21) is specified relative to the unit reference points (B10...B30) and the position of the unit reference points (B10...B30) is specified relative to the tool-carrier reference point (WTO),
wherein after the specification of a tool spindle (V11...V121) and a position for this in the tool-carrier coordinate system a positioning of the tool carrier (WT) takes place in that the position of these specified tool spindles (W1...W21) with regard to the tool-carrier reference point (WTO) is considered as position correction,
wherein any tool-spindle combinations (Wx,Wy,Wz) are specified as tool modules and wherein there is associated with each tool module a freely selectable, controlling tool spindle, with regard to which the positioning in the tool-carrier coordinate system (KW) takes place.

2. Method for machine tool control according to claim 1, wherein there is associated with a tool module a mirror-image tool module which is activated by a mirror command if required.

3. Method for machine tool control according to claim 2, wherein in the tool-carrier coordinate system a first (KW1) and a second workpiece zero point (KW2) is specified,
wherein the controlling tool spindle (V1...W15) is moved to a first point (X1,Y1) with regard to the first workpiece zero point (KW1),
wherein after the release of the mirror command the first point (X1,Y1) with regard to the first workpiece zero point (KW1) is mirrored,
and wherein the mirrored, controlling spindle is moved to a second point (X"2,Y"2) which corresponds to the mirrored point (X'1,-Y'1) with regard to the second workpiece zero point (KW2).

4. Method for machine tool control according to one of the above claims, wherein all geometrical data, tool corrections and tool-module configurations are specified by way of a graphic operator guidance for control in the dialogue method.

5. Method for machine tool control according to claim 4, wherein the controlling tool spindle (W1...W21) of a tool module is visualized separately on an operator display device (BV).

## Revendications

1. Procédé de commande d'une machine-outil destinée à l'usinage de pièces en forme de plaques, notamment en bois ou en matière plastique, comportant une commande numérique de positionnement (X,Y,Z) et de commande du fonctionnement d'un porte-outils (WT) dans un système (KW) de coordonnées du porte-outils,
selon lequel au moins une unité d'usinage (B1 à B3) comportant au moins deux broches d'outils (W1 à W15) entraînées d'une manière synchrone par l'intermédiaire d'une transmission, est disposée sur le porte-outils,
selon lequel on associe un point de référence (WTO) du porte-outils au porte-outils (WT) et un point de référence (B10 à B30) d'unité d'usinage (B1 à B3) chaque unité d'usinage et on l'enregistre dans la commande,
selon lequel on prescrit la position des broches d'outils (W1 à W21) par rapport aux points de référence (B10 à B30) d'unité, et la position des points de référence (B10...B30) d'unité par rapport au point de référence (WTO) du porte-outils,
selon lequel après prescription d'une broche d'outil (W1 à W21) et d'une position pour cette broche dans le système de coordonnées du porte-outils, on effectue un positionnement du porte-outils (WT), en tenant compte, en tant que correction de position, de la position de cette broche d'outil prescrite (W1 à W21) par rapport au point de référence (WTO) du porte-outils,
selon lequel on prescrit des combinaisons quelconques de broches d'outils (Wx, Wy, Wz) en tant que modules d'outils et on associe à chaque module d'outil une broche d'outil pilote, qui peut être sélectionnée et par rapport à laquelle le positionnement dans le système (KW) de coordonnée du porte-outils s'effectue.

2. Procédé pour la commande d'une machine-outil suivant la revendication 1, selon lequel à un module d'outil est associé un module d'outil symétrique comme dans un miroir, qui, le cas échéant, est activé par une instruction symétrique.

3. Procédé de commande d'une machine-outil suivant la revendication 2, selon lequel on prescrit un premier point zéro (KW1) et un second point zéro (KW2) de la pièce à usiner dans le système de coordonnées du porte-outils, selon lequel on déplace la broche d'outil pilote (W1 à W15) jusqu'à un premier point (X1,Y1) par rapport au premier point zéro (KW1) de la pièce à usiner, selon lequel après déclenchement de l'instruction de symétrie, on forme le symétrique du premier point (X1,Y1) par rapport au premier point zéro (KW1) de la pièce à usiner, et selon lequel on déplace la broche pilote rendue symétrique jusqu'à un second point (X"2, Y"2), qui correspond au point (X'1, -Y'1) symétrique du second point zéro (KW2) de la pièce à usiner.

4. Procédé de commande d'une machine-outil suivant l'une des revendications précédentes, selon lequel on prescrit toutes les données géométriques, corrections d'outils et les configurations de modules d'outils sont pour la commande, selon une procédure de dialogue, par l'intermédiaire d'un guide graphique de l'utilisateur.

5. Procédé de commande d'une machine-outil suivant la revendication 4, selon lequel on visualise la broche d'outil pilote (W1 à W21) d'un module d'outil séparément sur un appareil de visualisation (BV) de l'utilisateur.
